# EUROPEAN PATENT APPLICATION

(11) **EP 3 181 526 A1**
(43) Date of publication of application: **21.06.2017**
(21) Application number: 15201377.7
(22) Date of filing: 18.12.2015
(51) Int. Cl.: C02F 9/00, C02F 1/04, C02F 1/28, C02F 1/40, C02F 1/20, C02F 1/44, C02F 101/10, C02F 101/32, C02F 103/06, C02F 103/36, C02F 103/10, B01D 19/00

(54) **PROCESS FOR TREATING PRODUCED WATER FROM AN OIL & GAS FIELD**

(71) Applicant: SUEZ Groupe, 92040 Paris la Défense Cedex (FR)
(72) Inventor: SUTTON-SHARP, Emilie, 75018 PARIS (FR)
(74) Representative: Cabinet Armengaud Aîné

(57) **Abstract**

The present invention concerns a method for treating produced water stream from a production well of an oil and gas field comprising a first step of ultrafiltration or microfiltration and a second step of removing alkalinity as carbon dioxide gas, volatile organic compounds and H2S in the permeate by directing the permeate obtained in the first step to a gas stripping device.

## Description

The present invention concerns a method of treating produced water from an oil and gas field.

The world average is 3 barrels of water for each barrel of oil produced and this ratio increases over the lifetime of the producing wells.

In mature oil fields where the reservoir pressure has reduced to the point that oil cannot be produced from the reservoir naturally, the oil needs to be removed by injecting a substance into the reservoir to displace oil towards a producing well and maintain reservoir pressure. The exploration and production of oil and gas generates a large quantity of water.

Water is used as an injection fluid because it is immiscible with oil and will displace it, allowing more oil to be recovered from the reservoir. Produced water is produced as a byproduct along with the Oil and Gas. Produced water is an oil/water/solid mixture.

This process is known as Enhanced Oil Recovery (EOR) and more specifically water enhanced oil recovery if only water is injected in the oil bearing formation, chemical EOR when water and chemicals are injected, low salinity EOR when low salinity water is injected and steam EOR when water is injected as steam. The water source for the enhanced oil recovery process can be aquifer water, surface water, seawater or recycled produced water.

To reduce their environmental footprint and their water management costs, Oil & Gas companies are increasingly looking at reusing produced water for injection in the oil bearing formation. This option requires a comprehensive treatment process to avoid plugging the reservoir and the injection equipment with the undesired compounds contained in the produced water such as suspended solids, oil and scale forming dissolved solids.

Water management economics in Oil & Gas fields show that the most significant cost relates to the handling and disposal of by-products because it involves transportation, storage, underground injection and/or landfilling. To design a cost competitive solution to treat produced water it is therefore necessary to minimize the final by-product volumes due to be disposed of. The by-products of a produced water treatment line typically include an oily sludge stream generated by the pretreatment step concentrating the oil and suspended solids and a brine stream generated by the polishing step concentrating the dissolved solids.

The prior produced water treating techniques comprise generally an Oil and Suspended Solids removal step and a step for removal of dissolved solids, and exhibit the following technical problems to be solved:
- For the Oil and Suspended Solids removal step:
   o Flotation devices are commonly used to remove oil and solids from the produced water. To allow a good oil-water separation, these flotators are often operated with high dosing rates of coagulant aid chemicals which are costly and produce a coagulated sludge leading to the following constraints:
      ▪ Oil is not easily recoverable from the coagulated sludge inducing a revenue loss for the Oil & Gas operator,
      ▪ High operating cost due to the dewatering and transportation of the coagulated sludge by-product that needs to be sent to a disposal facility often remotely located,
      ▪ The oil is not entirely removed from the feed stream. The treated effluent contains oil residuals that might generate a problem in the downstream polishing steps to remove dissolved solids.
- For the removal of dissolved solids:
   Further to the removal of Oil and Suspended Solids, the removal of dissolved solids is often needed to reuse the produced water for Enhanced Oil Recovery or to discharge it to a surface water body. A Reverse Osmosis (RO) or a Nanofiltration (NF) membrane can be used to remove respectively the salts or only the scale forming divalent ions. RO and NF membranes produce a concentrated brine as a by-product. To minimize this by-product and achieve a high recovery, the RO or NF membrane system is commonly ran at a high pH to keep the silica and organic acids in solution and prevent membrane fouling and scaling. The alkaline nature of the RO or NF membrane feed stream favorises carbonate precipitation and therefore requires a thorough removal of hardness by an upstream treatment step to avoid carbonate scaling on the membrane to occur. The hardness removal step induces high operating costs due to the consumption of large quantities of hardness precipitating agents and the production of large volumes of sludge. Besides, at high pH, the RO membranes have a significantly shorter lifetime, inducing high membrane renewal cost.

In addition, the volatile organic compounds are only partially removed by the reverse osmosis step.

The international application WO 2012/142204 describes a method of recovering oil or gas and treating the resulting produced water, wherein hardness is reduced by chemically softening agent for forming hardness precipitants. In order to reduce organic fouling and silica scaling of the membranes, the pH of produced water to pass through reverse osmosis membrane is raised to above 10.5.

The international application WO 2014/151242 discloses an oil recovery process for recovering oil from an oil-bearing formation comprising a step of pretreatment for precipitating hardness compounds from the produced water, and a step of filtering the produced water to remove hardness compounds from permeate stream.

In this process, the concentration of hardness in the produced water can be further reduced by ion exchange unit.

However, the use of precipitation agents in these processes generates, as by-product, large quantities of oily sludge containing precipitated divalent ions. The precipitated nature of the sludge makes it unsuitable for reinjection or recycling in the process. It will therefore need to be disposed of as a waste stream which is costly because it involves dewatering, transportation, underground injection and/or landfilling of the waste.

Therefore, there still exists a need of a more economic and efficient process for treating produced water from an oil and gas filed.

The present invention relates to a method for treating produced water stream from a production well of an oil and gas field, comprising:
- a first step of obtaining a permeate and a first stream by directing the produced water stream to an ultrafiltration or microfiltration membrane system 30,
- a second step of removing the alkalinity as carbon dioxide, and volatile organic compounds and H₂S, in the permeate by directing the permeate obtained in the first step to a gas stripping device 40.In the method of the present invention, the pH of permeate obtained from microfiltration or ultrafiltration is decreased to a range of 3 to 6, which enables carbonate ions and/or bicarbonate ions in the permeate to be transformed to carbon dioxide.

The pH of the permeate is decreased by adding strong acid, for example hydrochloric acid.

The term "alkalinity" refers to the capacity of a water stream to neutralize an acid, which is essentially due to the presence of carbonate ions (-CO₃²⁻) and/or bicarbonate ions (-HCO₃⁻). The presence of alkalinity in produced water enables membrane fouling and scaling.

In traditional methods, the thorough removal of hardness by precipitation is necessary and important, since its presence can cause carbonate and hydroxide scaling in the hydrocarbon bearing reservoir during EOR injection or in the Reverse Osmosis or Nanofiltration polishing step.

Compared to conventional methods, the removal of carbonate ions and/or bicarbonate ions as carbon dioxide gas instead of hardness has several advantages. This method avoids the use of chemical precipitation agent and hardness precipitation which needs further removal steps inducing high operating costs. It also allows the removal of VOCs and H₂S which are undesired compounds in produced water for both reuse and final discharge applications.

The term "produced water" means water that is produced as a byproduct along with crude oil or gas exploration and production, especially water brought to the surface in an oil or gas recovery process.

The physical and chemical properties of produced water vary considerably depending on the geographic location of the field, the geological formation from which it comes, and the type of hydrocarbon product being produced. The major constituents in produced water are suspended solids, dissolved solids, such as carbonate/bicarbonate, sulfate, silica and scale forming divalent ions, and organic compounds, such as aliphatic hydrocarbons and aromatic hydrocarbons.

"Microfiltration" is referred to a physical filtration process using a membrane which retains the particles of size upper than 0.1 µm.

"Ultrafiltration" is referred to a physical filtration process using a membrane which retains the particles of size upper than 0.01 µm.

A microfiltration membrane or an ultrafiltration membrane used in the method of invention can be any conventional membrane of these types.

The term "permeate" refers to the part of liquid stream that passes through the pores of a filtration membrane and is free of the contaminants that are bigger than the Molecular Weight Cut-Off of the said membrane. The permeate obtained in the first step is free of suspended solids and water insoluble oil.

The first stream obtained in the first step containing the solids and the oil.

The first stream can be a concentrate or a backwash wastewater.

The term "concentrate" refers to the part of a liquid stream containing the particles which cannot pass through the pores of a filtration membrane.

The term "backwash wastewater" means a wastewater obtained by the membrane back washing process. "Back washing process" refers to a process pumping water backward through the membrane to remove trapped solid particles.

The transformation of alkalinity to carbon dioxide gas is carried out in a gas stripping device 40.

In addition, said gas stripping device enables also the removal of volatile organic compounds which could be pollutant of environment, such benzene, ethylbenzene, acrylonitrile, methylene chloride, toluene, hexane, heptane, xylene, and/or hydrogen sulfide.

Said gas stripping device can be any device known in prior art.

A permeate of microfiltration or ultrafiltration is free of water insoluble oil and suspended solids but containing dissolved solids and/or scale forming divalent ions, since they can traverse ultrafiltration or microfiltration membrane.

Sometimes, these dissolved solids and/or scale forming divalent ions need to be further removed. Nanofiltration or reverse osmosis are commonly used for removing from water stream respectively scale forming divalent ions, such as Ca²⁺, Mg²⁺, Ba²⁺, Sr²⁺ and total dissolved solids.

In an embodiment, the method of the present invention comprises, before the first step, a third step of decreasing the pH of the produced water stream down to a range of 3 to 6.

More particularly, the second step of the method of invention comprises maintaining the pH of the permeate in a range of 3 to 6 in the gas stripping device.

The permeate issued from the second step can be further treated by other purification or extraction steps to satisfy a specific quality requirement.

In an embodiment, said method of invention comprises, after the second step, a fourth step of directing the permeate obtained in the second step to an absorbent to remove water soluble oil.

Said absorbent can be any material known in prior art having oil adsorbing property, for example macroporous and mesoporous carbonaceous or polymeric media.

In another embodiment, said method of invention comprises, after the second step, a fourth step of directing the permeate obtained in the second step to a reverse osmosis membrane, a nanofiltration membrane, a forward osmosis membrane, or evaporation/crystallization device 50 to obtain a purified water stream free of most dissolved solids and/or scale forming divalent ions.

The permeate obtained in the fourth step is free of most dissolved solids and/or scale forming divalent ions, since they are rejected by a reverse osmosis membrane, a nanofiltration membrane, or a forward osmosis membrane.

In another embodiment, said method of invention comprises, after the second step, a fourth step of directing the permeate obtained in the second step firstly to an absorbent to remove water soluble oil and further to a reverse osmosis membrane, a nanofiltration membrane, a forward osmosis membrane, or evaporation/crystallization device to remove dissolved solids and/or scale forming divalent ions.

A preferred embodiment of the present invention concerns a method comprising:
- a first step of obtaining a permeate and a first stream by directing the produced water stream to an ultrafiltration or microfiltration membrane system 30,
- a second step of removing the alkalinity as carbon dioxide, and volatile organic compounds and H₂S, in the permeate by directing the permeate obtained in the first step to a gas stripping device 40, wherein the pH of the permeate is maintained in a range of 3 to 6 in the gas stripping device,
- a fourth step of directing the permeate obtained in the second step to a reverse osmosis membrane, a nanofiltration membrane, a forward osmosis membrane, or evaporation/crystallization device 50 to obtain a purified water stream free of most dissolved solids and/or scale forming divalent ions

The nanofiltration membrane, the reverse osmosis membrane or the forward osmosis membrane used in the method of the invention can be any conventional membrane of these types.

In one embodiment, the method of the present invention comprises, before the first step, a preliminary step of directing produced water stream from a production well to primary oil-water separation device 20 for a preliminary separation of suspended solids and oil from produced water stream

Said production well can be oil or gas production wells.

Produced water stream entering into primary oil-water separation device 20 can be produced water directly generated from enhanced oil recovery in oil and gas fields, especially from water flooding enhanced oil recovery, or from chemical enhanced oil recovery.

Said primary oil-water separation device can be all kinds of device known in prior art for preliminary water treatment, for example a gravity separator, a hydrocyclone or a flotator.

In another embodiment, the method of the present invention comprises, an intermediate step between the first step and the second step, of recirculating the first stream back to the upstream primary oil-water separation device 20.

In a preferred embodiment, said method comprises a fifth step of treating the first stream by a coalescing contactor 80 to recover:
- a pure oil stream, and
- a deoiled first stream, especially a deoiled concentrate stream and/or backwash wastewater stream, which is then recirculated back to the upstream pretreatment device 20.

Said coalescing contactor can be any type of coalescing contactor described in prior art, in particular a membrane coalescing contactor which comprises porous polymeric membrane, more particularly a coalescing contactor described in WO 2013/188837.

The purified water stream recovered from the fourth step, according to its purity and content, can be reinjected in a hydrocarbon bearing formation or discharged to a surface water body.

Preferred embodiments of the invention are disclosed in following description and the accompanying drawing which are merely illustrative of such invention.
Figures 1A and 1B are schematic illustration of the process of the present invention including recirculation of the concentrate stream and/or the backwash wastewater stream back to the upstream pretreatment device.
Figures 2A and 2B are schematic illustration of the process of the present invention including recirculation via a coalescing contactor of the concentrate stream and/or the backwash wastewater stream back to the upstream pretreatment device.

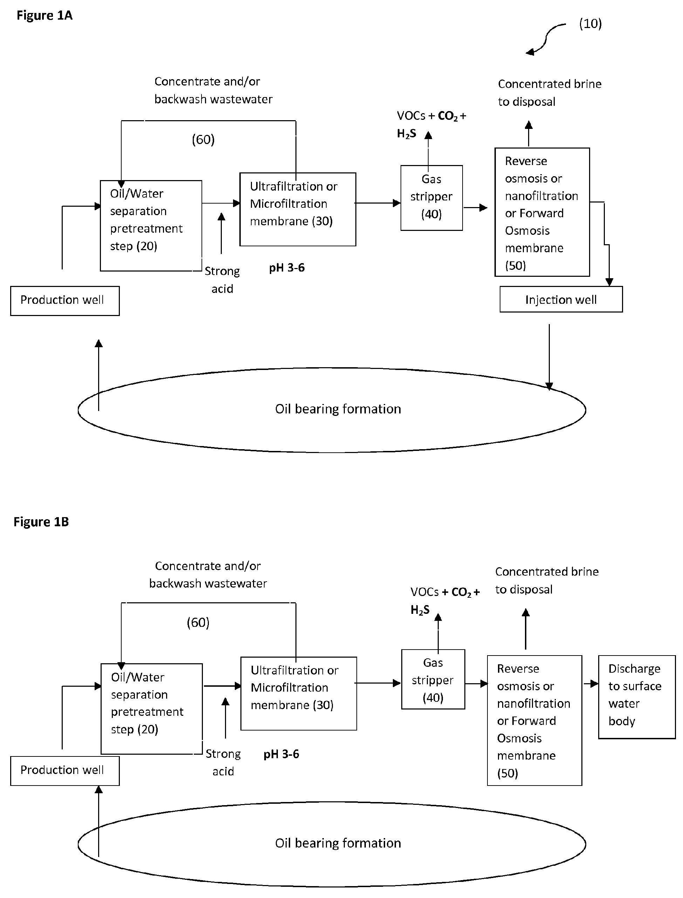

In figures 1A and 1B, the produced water treatment system of the present invention is indicated generally by the numeral 10. The system includes primary oil-water separation device 20, an ultrafiltration or microfiltration membrane 30, a gas stripper 40, a reverse osmosis or nanofiltration or forward osmosis membrane 50, and a pipeline 60 for recycling concentrate stream and/or the backwash wastewater stream obtained in membrane back to the primary oil-water separation device 20.

According to the preliminary step of the method of invention, produced water stream entering into primary oil-water separation device 20 is generated in oil and gas production well 70.

According to the first step of the method of invention, produced water stream obtained after oil/water preliminary separation in device 20 is directed to ultrafiltration or microfiltration membrane 30.

Before being directed to ultrafiltration or microfiltration membrane 30, according to the third step of the method of invention, the pH of the produced water stream is decreased to a range of 3 to 6 by adding strong acid.

According to the second step of the method of invention, the permeate obtained from ultrafiltration or microfiltration is directed to the gas stripper 40. Volatile organic compounds and CO₂ are escaped from said gas stripper via an outlet for gas. According to an intermediate step, the concentrate and /or backwash wastewater (first stream) obtained in ultrafiltration or microfiltration is recirculated to device 20 via pipeline 60.

The permeate obtained after gas stripping is directed to a reverse osmosis or nanofiltration or forward osmosis membrane 50. Permeate obtained from a reverse osmosis or nanofiltration or forward osmosis is reinjected in an oil bearing formation (figure 1A) or discharged to a surface water body (figure 1B). Concentrate obtained is the final by-product to be disposed of.

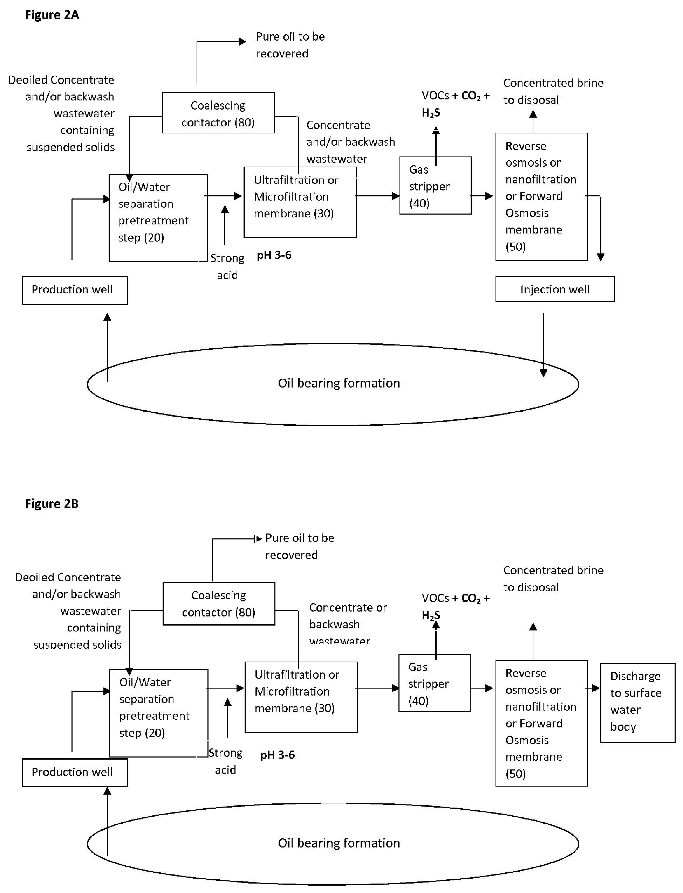

In figures 2A and 2B, the produced water treatment system 10 includes an primary oil-water separation device 20, an ultrafiltration or microfiltration membrane 30, a gas stripper 40, a reverse osmosis or nanofiltration or forward osmosis membrane 50, and a coalescing contactor 80.

According to the preliminary step of the method of invention, produced water stream entering into primary oil-water separation device 20 is generated in oil and gas production well 70.

According to the first step of the method of invention, produced water stream obtained after primary oil/water separation in device 20 is directed to ultrafiltration or microfiltration membrane 30.

Before being directed to ultrafiltration or microfiltration membrane 30, according to the third step of the method of invention, the pH of the produced water stream is decreased to a range of 3 to 6 by adding strong acid.

According to the second step of the method of invention, the permeate obtained from ultrafiltration or microfiltration is directed to the gas stripper 40. Volatile organic compounds and CO₂ are escaped from said gas stripper via an outlet for gas.

Different from the embodiment disclosed in figure 1A and 1B, according to the fifth step of the method of invention, the concentrate and/or backwash wastewater (first stream) obtained in ultrafiltration or microfiltration is treated by coalescing contactor 80, wherein pure oil is recovered and deoiled concentrate and/or backwash wastewater containing suspended solids is recirculated to primary oil/water separation device 20.

The permeate obtained after gas stripping is directed to a reverse osmosis or nanofiltration or forward osmosis membrane 50. Permeate obtained from a reverse osmosis or nanofiltration or forward osmosis is reinjected in an oil bearing formation (figure 2A) or discharged to a surface water body (figure 2B). Concentrate obtained is the final by-product to be disposed of.

## Claims

1. A method for treating produced water stream from a production well of an oil and gas field, comprising:
- a first step of obtaining a permeate and a first stream by directing the produced water stream to an ultrafiltration or microfiltration membrane system (30),
- a second step of removing the alkalinity as carbon dioxide gas, and volatile organic compounds and H₂S, in the permeate by directing the permeate obtained in the first step to a gas stripping device (40).

2. The method according to claim 1, comprising, before the first step, a third step of decreasing the pH of the produced water stream down to a range of 3 to 6.

3. The method according to anyone of claims 1 to 2, wherein the second step comprises maintaining the pH of the permeate in a range of 3 to 6 in the gas stripping device.

4. The method according to claim 1, wherein said method comprises, after the second step, a fourth step of directing the permeate obtained in the second step to:
- an absorbent to remove water soluble oil, and/or
- a reverse osmosis membrane, a nanofiltration membrane, a forward osmosis membrane, or evaporation/crystallization device (50) to obtain a purified water stream free of most dissolved solids and/or scale forming divalent ions.

5. The method according to any one of the preceding claim, wherein said method comprises, before the first step , a preliminary step of directing produced water stream from a production well to primary oil-water separation device (20) for a preliminary separation of suspended solids and oil from produced water stream.

6. The method according to claim 5 wherein said method comprises an intermediate step between the first step and the second step, of recirculating the first stream back to the upstream primary oil-water separation device (20).

7. The method according to claim 5, wherein said method comprises a fifth step of treating the first stream by a coalescing contactor (80) to recover:
- a pure oil stream, and
- a deoiled concentrate stream and/or the backwash wastewater stream, which is then recirculated back to the upstream primary oil-water separation device (20).

8. The method according to any one of claim 4 to 7, wherein the purified water stream recovered from the fourth step is reinjected in a hydrocarbon bearing formation or discharged to a surface water body.
